# FASCICULE DE BREVET EUROPEEN

(11) **EP 1 335 059 B1**
(45) Date de publication et mention de la délivrance du brevet: **15.11.2006**
(21) Numéro de dépôt: 03290277.7
(22) Date de dépôt: 04.02.2003
(51) Int. Cl.: D06F 37/30, G01P 3/44

(54) **Machine à tambour équipée d'un ensemble capteur de paramètres de rotation du tambour**
Trommelmaschine mit Sensoranordnung zur Messung der Drehparameter der Trommel
Drum type machine with sensor assembly for sensing the rotational parmeters of the drum

(30) Priorité: 06.02.2002 FR 0201447
(43) Date de publication de la demande: 13.08.2003
(73) Titulaire: Aktiebolaget SKF, 415 50 Göteborg (SE)
(72) Inventeur: Niarfeix, François, 37000 Tours (FR)
(74) Mandataire: Casalonga, Axel

(56) Documents cités:
- EP-A- 1 037 051
- DE-A- 2 151 542
- FR-A- 2 196 542
- FR-A- 2 784 402

## Description

La présente invention concerne une machine équipée d'un tambour et d'un ensemble capteur de paramètres de rotation du tambour.

Les appareils électroménagers, en particulier les appareils électroménagers du type machines à laver ou à sécher le linge, comprennent souvent des tambours, dans lesquels on dispose des objets à traiter. Le tambour est ensuite entraîné en rotation selon un programme de traitement déterminé. Au cours de l'exécution du programme, il est nécessaire de contrôler et de commander des paramètres de rotation du tambour.

Ainsi, il est connu du document FR 2 784 402 de doter le panier d'une machine à laver le linge à ouverture par le dessus de capteurs de position. La machine comprend un panier cylindrique monté à rotation dans une enceinte possédant une porte d'accès au panier par le dessus. Le panier comprend une ouverture et un volet articulé de fermeture associé. Le panier est relié à un moteur d'entraînement par l'intermédiaire d'une courroie et d'une poulie d'entraînement de grand diamètre, coaxiale au panier. La poulie comprend une couronne périphérique et une bande ferromagnétique disposée sur la face interne de la couronne périphérique, dans un secteur angulaire déterminé. Un capteur magnétosensible qui est fixé en étant orienté radialement vers la couronne, coopère avec un aimant fixé en regard du capteur, du côté opposé de la couronne. Lorsque le secteur angulaire de la poulie recouvert par la bande ferromagnétique se situe entre le capteur magnétosensible et l'aimant, le capteur magnétosensible ne détecte plus le champ magnétique produit par l'aimant.

Un tel agencement permet de détecter lorsque le panier se situe dans une position angulaire déterminée, par exemple en regard de la porte d'accès, afin de l'arrêter dans cette position en fin de cycle. Cependant, ce dispositif ne permet pas de détecter avec précision la position, la vitesse et/ou l'accélération angulaire du panier.

Ce dispositif nécessite en outre de prévoir la conception de logements et de moyens de fixation du capteur et de l'aimant. Le montage de la machine nécessite la mise en oeuvre d'un grand nombre d'opérations différentes : montage du tambour à rotation, fixation du capteur dans l'enceinte et connexion de ce dernier au moteur d'entraînement du panier, fixation de l'aimant dans l'enceinte, et fixation de la bande ferromagnétique à l'intérieur de la poulie. Il est nécessaire de prévoir l'approvisionnement des différents éléments du dispositif de capteur, ce qui augmente le risque d'une rupture d'approvisionnement d'un des éléments, entraînant l'arrêt de la fabrication. Le temps de fabrication de la machine est augmenté par l'utilisation d'un grand nombre d'éléments séparés. Ces contraintes de conception, de fabrication et d'approvisionnement augmentent le coût de fabrication d'une telle machine.

*Le document DE 2 151 542 (SIEMENS AG) décrit un détecteur de position utilisé sur un tambour de machine à laver à ouverture par le dessus. Le détecteur comprend des conduites de circulation de fluides logées dans un arbre fixe de montage du tambour. L'ouverture ou la fermeture des conduites de circulation est commandée par un piston sollicité par un ressort. Le piston est également soumis à des efforts magnétiques exercés par un aimant disposé sur un palier rotatif de fixation du tambour sur l'arbre.*

*Un signal fluidique dans les conduites, formé par ouverture*/*fermeture du piston lorsque l'aimant logé dans le palier en rotation passe en regard du piston, est converti en signal électrique pour la commande d'un moteur d'entraînement du tambour. Le signal fluidique est analysé pour connaître les paramètres de rotation du tambour.*

*La détection est basée sur des moyens fluidiques. De tels moyens de mesure sont compliqués, et nécessitent une conception particulière de la machine à laver, avec des conduites de circulation de fluide, et des moyens supplémentaires de conversion d'un signal fluidique en signal électrique.*

*En outre, les moyens fluidiques du détecteur sont prévus dans un axe, un aimant étant logé dans un palier du tambour.*

La présente invention concerne une machine à tambour pourvue d'un ensemble capteur de paramètres de rotation du tambour à partir d'un nombre limité d'éléments, permettant de faciliter le montage de la machine et de simplifier l'approvisionnement des différents éléments constituant la machine.

L'invention a également pour objet une machine à tambour pourvue d'un ensemble capteur des paramètres de rotation du tambour, permettant de contrôler la rotation du tambour en vue de la réalisation de cycles déterminés.

L'invention a encore pour objet une machine à tambour pourvue d'un ensemble capteur de paramètres de rotation du tambour possédant un coût de fabrication faible.

Une telle machine comprend un bâti, un tambour monté à rotation sur le bâti et une porte d'accès au tambour, le tambour étant monté à rotation par l'intermédiaire d'un palier à roulement instrumenté pourvu *d'une bague tournante, d'une bague non tournante et* d'un ensemble capteur de paramètres de rotation du tambour, *ledit ensemble capteur comprenant un bloc capteur fixé sur la bague tournante et une roue codeuse fixée sur la bague non tournante.*

Le montage du tambour par l'intermédiaire d'un palier à roulement instrumenté permet de détecter la position, la vitesse et/ou l'accélération angulaire du tambour. Les paliers à roulement de montage du tambour intégrant un ensemble capteur permettent de simplifier la conception de la machine et de limiter le nombre d'éléments à assembler. La machine peut être montée avec un nombre limité d'opérations de montage : le tambour est monté à rotation dans l'enceinte sans avoir à monter d'autres éléments pour la détection des paramètres de rotation du tambour.

Avantageusement, le palier à roulement instrumenté comprend des moyens d'indexation angulaire de la position du tambour. Les moyens d'indexation angulaire de la position du tambour permettent de connaître la position angulaire du tambour. En particulier, les moyens d'indexation angulaire de la position du tambour permettent d'arrêter ledit tambour dans une position déterminée, par exemple en vue de son déchargement et de son chargement ultérieur.

Dans un mode de réalisation, le tambour comprend une ouverture formée dans une paroi cylindrique par exemple associée à un volet de fermeture articulé. La porte d'accès est disposée de façon à permettre l'accès à l'ouverture du tambour lorsque ce dernier est arrêté dans une position angulaire dans laquelle l'ouverture vient en regard de la porte d'accès. Par exemple, la machine peut être une machine à laver ou sécher le linge, à chargement par le dessus, la porte d'accès au tambour étant fixée sur une partie supérieure du bâti pour permettre un accès au tambour par le dessus.

Dans un mode de réalisation, le palier à roulement instrumenté comprend une liaison électrique entre des éléments conducteurs associés respectivement au tambour et au bâti. La liaison électrique entre une partie tournante et une partie non tournante permet d'évacuer une charge électrostatique apparaissant sur le tambour lors de la rotation de ce dernier.

Dans un mode de réalisation, la liaison électrique comprend lame conductrice solidaire par une extrémité d'une partie fixe de l'ensemble capteur, et venant frotter pas son autre extrémité sur une partie tournante du palier à roulement instrumenté. L'intégration de la liaison électrique dans l'ensemble capteur de paramètres de rotation assure la compacité de l'ensemble. Par ailleurs, la liaison électrique entre le tambour et une masse, est obtenue lors du montage à rotation du tambour par l'intermédiaire du palier à roulement instrumenté, sans ajout de pièces supplémentaires, ce qui permet de limiter le nombre de pièces à approvisionner et le nombre d'opérations de montage.

Dans un mode de réalisation, la liaison électrique est disposée entre un bloc capteur et une roue codeuse conductrice. Dans une variante, la liaison électrique est disposée entre un bloc capteur et une bague tournante du palier à roulement.

Avantageusement, le palier à roulement instrumenté comprend des moyens de détection de température. En effet, l'élévation de la température d'un palier à roulement traduit indirectement les conditions, en particulier de charge et de vitesse, auxquelles est soumis ledit palier à roulement de la machine. La surveillance de la température du palier à roulement permet de vérifier si le palier à roulement fonctionne dans des conditions normales et permet de prévenir des défaillances qui seraient dues à des conditions d'utilisation anormales de la machine. Les moyens de détection de température sont protégés vis-à-vis des éléments extérieurs traités dans le tambour ou d'eau de traitement introduite dans le tambour.

Avantageusement, les moyens de détection de température sont supportés par un bloc capteur de l'ensemble capteur.

Dans un mode de réalisation, un bloc capteur de l'ensemble capteur est disposé d'un côté du palier à roulement opposé au tambour. Le bloc capteur de l'ensemble capteur disposé d'un côté du palier à roulement opposé au tambour, permet d'isoler le bloc capteur par rapport au tambour, par exemple à l'aide de moyens d'étanchéité, notamment dans le cas d'une machine à laver le linge dans laquelle le tambour est rempli d'eau.

L'invention concerne également un palier à roulement instrumenté destiné au montage d'un tambour dans une machine, en vue de la détection de paramètres de rotation du tambour.

La présente invention et ses avantages seront mieux compris à l'étude de la description détaillée d'un mode de réalisation pris à titre d'exemple nullement limitatif et illustré par les dessins annexés, sur lesquels :
- la figure 1 est une vue en coupe d'une machine à tambour, selon l'invention ;
- la figure 2 est une vue de détail en coupe axiale du montage du tambour de la machine selon la figure 1 ;
- la figure 3 est une vue en perspective d'une roue codeuse d'un palier à roulement instrumenté ; et
- la figure 4 est une demi-vue en coupe d'un palier à roulement instrumenté utilisé pour le montage d'un tambour d'une machine, selon un aspect de l'invention.

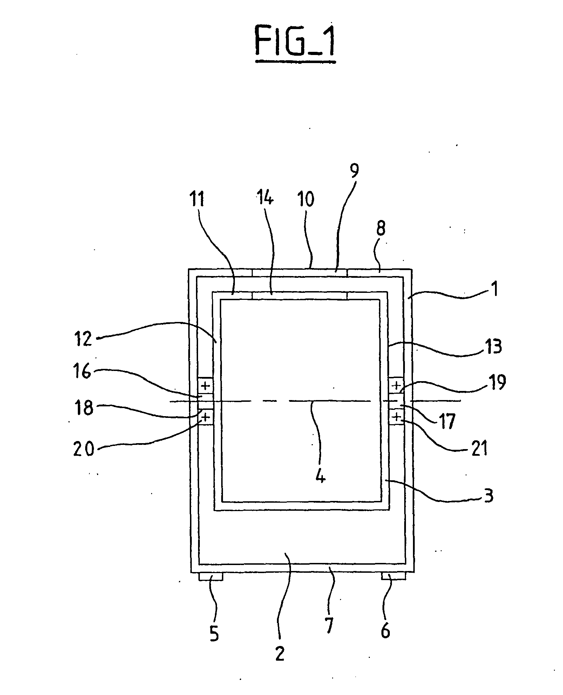

Sur la figure 1, une machine comprend un bâti 1 formant une enceinte 2 et un tambour 3 de forme générale cylindrique situé dans l'enceinte 2. Le tambour 3 est monté à rotation par rapport au bâti 1 selon son axe 4. Le bâti 1 repose sur le sol par l'intermédiaire de pieds 5, 6, dont deux sont visibles sur la figure 1, les pieds 5, 6 étant situés sur une paroi inférieure 7 du bâti 1, à l'extérieur de l'enceinte 2. Le bâti 1 comprend une paroi supérieure 8, munie d'une ouverture 9 pouvant être fermée à l'aide d'une porte d'accès 10. L'ouverture de la porte 10 permet d'accéder au tambour 3.

Le tambour 3 comprend une paroi cylindrique 11 et deux parois radiales d'extrémité 12, 13, fermant axialement le tambour 3. La paroi cylindrique 11 peut être munie de renforts axiaux pour augmenter sa rigidité. La paroi cylindrique 11 peut être perforée, comme cela est le cas dans les machines à laver, pour permettre le passage d'eau entre l'intérieur et l'extérieur du tambour 3.

La paroi cylindrique 3 est munie d'une ouverture 14. L'ouverture 14 est située en regard de l'ouverture 8 du bâti 1 lorsque le tambour 3 est dans une position angulaire déterminée. L'ouverture 14 du tambour 3 peut être fermée de façon connue par un volet articulé, éventuellement perforé, non représenté sur la figure 1. Le tambour 3 est monté à rotation sur le bâti 1 par l'intermédiaire de supports 16, 17, fixés axialement de part et d'autres du tambour 3. Les supports 16, 17 comprennent chacun une portée cylindrique 18, 19, permettant la fixation des supports de tambour 16, 17 par l'intermédiaire de paliers à roulement 20, 21.

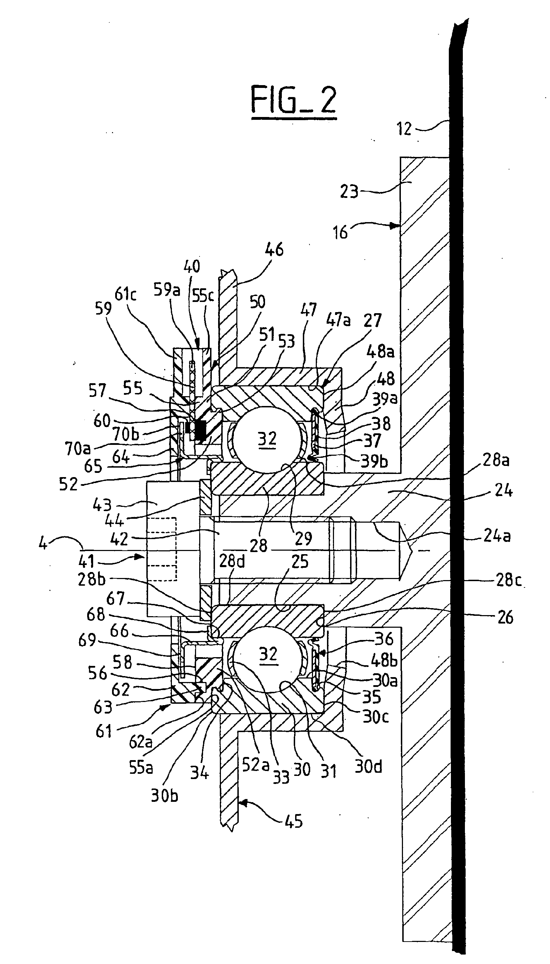

Sur la figure 2, les références aux éléments semblables à ceux de la figure 1 ont été reprises. Le support 16 comprend un flasque 23 fixé sur la paroi radiale 12, par exemple par l'intermédiaire de vis, non représentées sur la figure 2. Le support 16 comprend un axe 24, coaxial au tambour 3, et s'étendant à partir d'une zone centrale du flasque 23, du côté opposé au tambour 3. L'axe 24 est muni à son extrémité libre d'une portée cylindrique 25, de moindre diamètre formant un épaulement radial 26.

Pour le montage du tambour 3 sur le bâti 1, la machine comporte un palier à roulement instrumenté 27, qui comprend une bague tournante intérieure 28, pourvue sur une surface extérieure 28a d'un chemin de roulement toroïdal 29, et une bague non tournante extérieure 30, pourvue sur un alésage 30a d'un chemin de roulement toroïdal 31. Le palier à roulement 27 comprend des éléments roulants 32, ici des billes, disposés entre les chemins de roulement toroïdaux 29, 31 des bagues intérieure 28 et extérieure 30, maintenus circonférentiellement espacés par une cage 33.

La bague intérieure 28 comprend des faces latérales radiales 28b, 28c et un alésage 28d. La bague extérieure 30 comprend des faces latérales radiales 30b, 30c, situées dans le même plan respectivement que les faces latérales radiales 28b, 28c de la bague intérieure 28, et une surface extérieure cylindrique 30d. La bague extérieure 30 comprend, sur son alésage 30a, une rainure annulaire 34 située à proximité de la face latérale 30b. La bague extérieure 30 comprend une seconde rainure annulaire 35 située à proximité de la face latérale 30c de la couronne extérieure 30, en étant symétrique de la première rainure 33 par rapport au plan radial passant par le centre des éléments roulants 32.

Un joint d'étanchéité 36 comprenant une armature métallique 37 et une partie élastique 38 surmoulée sur l'armature métallique 37 est disposé entre les bagues intérieure 28 et extérieure 30. La partie élastique 38 est en matériau synthétique et comprend un bourrelet 39a en saillie dans la rainure 35, à partir de la zone de plus grand diamètre de la partie élastique 38, et une lèvre 39b venant en contact de frottement avec la surface extérieure 28a de la bague intérieure 28, à partir de la zone de moindre diamètre de la partie élastique 38. Un ensemble capteur 40, qui sera décrit plus en détail par la suite, est fixé sur le palier à roulement 27, du côté opposé à l'organe d'étanchéité 36.

Le palier à roulement 27 est ajusté sur la portée 25 de l'axe 24 du support 16. L'alésage 28d de la bague intérieure 28 vient en contact avec la portée cylindrique 25. Le palier à roulement 27 est introduit sur la portée cylindrique 25 jusqu'à ce que la face latérale 28c de la bague intérieure 28 vienne en contact avec l'épaulement 26 de l'axe 24. La portée cylindrique 25 possède un diamètre sensiblement égal au diamètre de l'alésage 28d de la bague intérieure 28. L'axe 24 possède un diamètre extérieur supérieur au diamètre de l'alésage 28d de la bague intérieure 28, tout en étant inférieur au diamètre de la surface extérieure 28a de la bague intérieure 28. La portée cylindrique 25 s'étend sur une longueur axiale inférieure à la longueur axiale de la bague intérieure 28.

L'extrémité libre de l'axe 24 est pourvue d'un trou central taraudé 24a. Une vis 41 comprenant une tige filetée 42 est introduite dans le trou taraudé 24a de l'axe 24 et une tête de vis 43. Une rondelle 44 est disposée entre la tête de vis 43 et la face latérale 28b de la bague intérieure 28. La vis 41 est serrée de façon que la rondelle 44 soit pressée en appui axial contre la face latérale 28b de la bague intérieure 28, afin de maintenir le palier à roulement 27 sur la portée cylindrique 25.

La bague extérieure 30 est fixée sur le bâti 1 dans un logement 45, en forme générale de coupelle, formé par une portion radiale 46, une enveloppe tubulaire 47 s'étendant axialement vers le tambour 3 à partir de la portion radiale 46, et un rebord radial 48 s'étendant vers l'intérieur à partir du bord libre de l'enveloppe tubulaire 47.

Le bord libre du rebord radial 48 est recourbé pour s'étendre obliquement vers l'intérieur et en direction du tambour 3. La bague extérieure 30 est ajustée dans le logement 45 en venant en contact par sa surface extérieure 30d avec un alésage 47a de l'enveloppe tubulaire 47, la face latérale 30c de la bague extérieure 30 venant en contact avec la surface 48a du rebord radial 48 opposée au tambour 3. Le bord libre 48b du rebord radial 48 possède un diamètre intérieur supérieur au diamètre de l'axe 25, pour permettre le passage de l'axe 25. L'enveloppe tubulaire 47 possède une longueur inférieure à la longueur axiale de la bague extérieure 30, de sorte que la portion radiale 46 se situe axialement entre les surfaces latérales 30b, 30c de la bague extérieure 30, en étant adjacente à la face latérale 30b opposée au rebord radial 48.

L'ensemble capteur 40 comprend un bloc capteur 50 comprenant un support 51 qui comprend un corps annulaire 52 de rayon extérieur sensiblement égal au rayon de l'alésage 30a de la bague extérieure 30, et un diamètre intérieur compris entre le diamètre de l'alésage 30a de la bague extérieure 30 et le diamètre de la surface extérieure 28a de la bague intérieure 28.

Le corps 52 comprend une extrémité axiale 52a en saillie dans l'espace compris entre les bagues intérieure 28 et extérieure 30. Le corps 52 comprend une saillie radiale annulaire 53 s'étendant vers l'extérieur à partir de la surface extérieure de l'extrémité 52a dans la rainure 34. La saillie 53 est en concordance de forme avec la rainure 34 dans laquelle elle est introduite. La saillie 53 permet la fixation du corps 52 sur la bague extérieure 30 par interférence radiale.

Une collerette radiale 55 s'étend vers l'extérieur à partir de l'extrémité du corps 52 opposée à l'extrémité 52a. La collerette radiale 55 forme une surface radiale 55a en contact avec la face latérale 30b de la bague extérieure 30. Un aimant 57 est noyé dans le corps 52 en affleurant une surface radiale 58 opposée aux éléments roulants 32. Le bloc capteur 50 porte une carte 59 en contact avec la surface radiale 58 et portant un organe de détection 60, ici un capteur magnétosensible, situé axialement en regard de l'aimant 57. La carte 59 comprend une projection radiale 59a munie de moyens de connexion électrique non visibles, pour la transmission de signaux de mesure émis par l'organe de détection 60 vers des moyens de traitement distants. Les moyens de connexion électrique peuvent être des fiches ou des languettes conductrices. La carte 59 peut être une carte de circuit imprimé.

L'ensemble capteur comprend également un capot 61 comprenant une couronne 62 à section carrée dont une face latérale 62a vient en contact avec la collerette 55 du cotée opposé à la bague extérieure 30. La couronne 62 comprend une encoche permettant le passage de la projection radiale 59a de la carte 59. Le capot 61 comprend également une dent 63 en saillie axiale à partir d'une portion de la face latérale 62a de la couronne 62, et venant dans une encoche 56 correspondante de la collerette 55 du corps 52. Le capot 61 comprend une portion radiale 64 s'étendant vers l'intérieur à partir de la couronne 62 en étant espacée axialement du corps 52. Le bord libre de la portion radiale 64 possède un diamètre sensiblement égal au diamètre de la surface extérieure 28a de la bague intérieure 28.

La collerette 55 du bloc capteur 50 et le capot 61 comprennent des extensions radiales 55c, 61c situées en regard et entourant la projection radiale 59a de la carte 59 pour former un logement apte à recevoir une prise de connexion électrique avec des moyens de traitement distants.

L'ensemble capteur comprend également une roue codeuse 65 en forme générale de coupelle. La roue codeuse 65 comprend une partie cylindrique 66 dont une extrémité axiale est repliée intérieurement en revenant axialement en sens inverse en formant une portée cylindrique intérieure 67, puis radialement vers l'intérieur en formant un rebord radial 68. La portée cylindrique intérieure 67 est emmanchée sur la surface extérieure 28a de la bague intérieure 28 jusqu'à ce que le rebord radial 68 vienne en contact avec la face latérale 28b de la bague intérieure 28. La roue codeuse 65 comprend une portion radiale s'étendant vers l'extérieur à partir de l'extrémité la partie cylindrique 66 opposée à la bague intérieure 28. La portion radiale 69 se situe axialement entre la portion radiale 64 du capot 61 et l'organe de détection 60 fixé sur la carte 59. Le bord libre de la paroi radiale 69 comprend une alternance circonférentielle d'encoches 70a et de languettes 70b.

Lors de la rotation de la bague intérieure 28 par rapport à la bague extérieure 30, l'alternance de languettes 70a et d'encoches 70b défile à rotation devant l'organe de détection. La roue codeuse 65 est en matériau ferromagnétique. Le défilement des languettes 70a et des encoches 70b provoque des variations du champ magnétique produit par l'aimant 57. L'organe de détection 60 détecte les variations de champ magnétique provoquées par le défilement des encoches 70a et des languettes 70b.

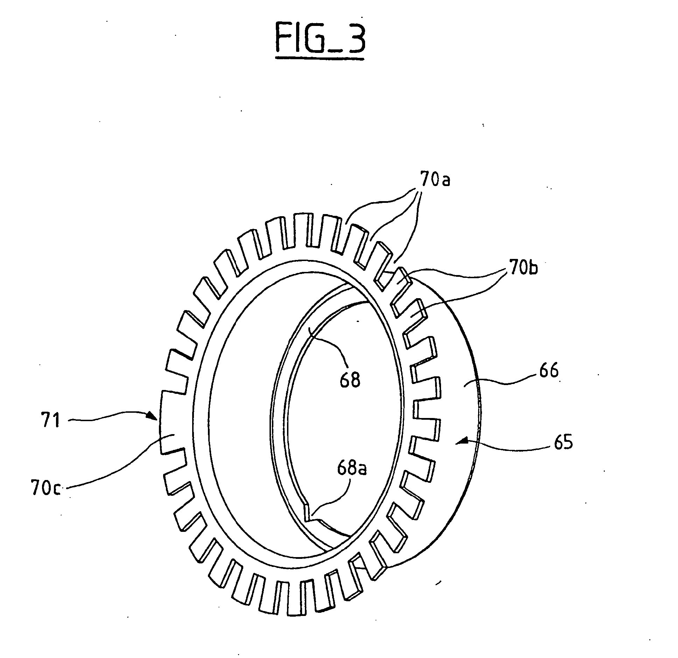

Comme on peut mieux le voir sur la figure 3, le rebord radial 68 de la roue codeuse 65 comprend une encoche 68a d'indexation angulaire de la roue codeuse 65 formant un repère visuel de montage pour l'orientation angulaire de la roue codeuse 65 par rapport au tambour 3. La roue codeuse 65 comprend également sur sa partie active située en regard de l'organe de détection 60 une zone de référence angulaire 71 dans l'alternance des encoches 70a et des languettes 70b. La zone de référence angulaire 71 est ici réalisée par l'absence d'une encoche, de sorte qu'il existe une languette 70c plus large que les autres qui provoque l'émission par l'organe de détection 60 d'une impulsion particulière dans un signal émis par l'organe de détection 60 lors du défilement de la roue codeuse 65 en regard dudit organe de détection 65.

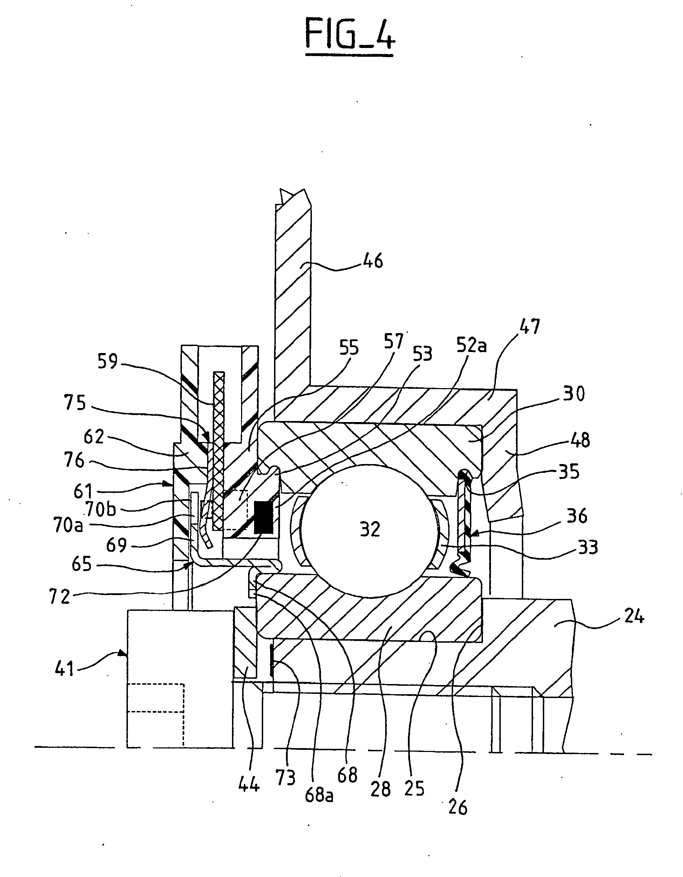

Sur la figure 4, l'ensemble capteur comprend également une sonde de température 72 noyée dans le corps 52, plus particulièrement dans l'extrémité 52a du corps 52 située entre les bagues intérieure 28 et extérieure 30. L'encoche d'indexation 68a se situe dans le même plan axial qu'un repère d'indexation 73 formé sur l'extrémité de l'axe 24. Le repère 73 permet une orientation angulaire de la roue codeuse 65 par rapport à l'axe 24 et donc au tambour 3, lors d'un montage du palier à roulement sur l'axe 24.

Les moyens d'indexation de la roue codeuse 65 permettent de connaître, grâce à l'ensemble capteur du palier à roulement instrumenté, la position du tambour 3. L'encoche 68a forme un repère visuel de montage de la bague intérieure 28 munie de la roue codeuse 65 sur l'axe 24 muni de son repère visuel 73. Ainsi, la roue codeuse 65, et la zone de référence angulaire 71 de la roue codeuse 65 sont indexées angulairement par rapport au tambour 3. Ainsi, lors d'un arrêt du tambour 3, en fin de cycle de traitement, on peut commander l'arrêt du tambour 3 de sorte que l'ouverture 14 du tambour 3 se situe en regard de la porte d'accès 10 au tambour 3, afin de permettre le déchargement de ce dernier (fig. 1).

Le rebord radial 64 du capot 61 possède un diamètre intérieur supérieur au diamètre de la surface extérieure 28a de la bague intérieure 28. Le rebord radial 64 ne cache pas visuellement le rebord radial 68 de la roue codeuse 65, permettant ainsi de voir l'encoche 68a et l'extrémité de l'axe 24 lors du montage de palier à roulement sur l'axe 24. La roue codeuse 65 peut être orientée angulairement par rapport à l'axe 24, le palier à roulement étant déjà entièrement monté.

L'ensemble capteur comprend également un balai électrostatique 75 sous la forme d'une lame 76 solidaire par une extrémité d'une partie fixe de l'ensemble capteur, et venant frotter pas son autre extrémité sur une partie tournante 69 du palier à roulement instrumenté 27. La lame 76 comprend une extrémité située entre la couronne 62 du capot 61 en étant fixée sur la carte 59, et en étant reliée électriquement aux moyens de connexion électrique de la carte 59, l'extrémité opposée de la lame 76 venant frotter sur une face interne de la paroi radiale 69 de la roue codeuse 65 orientée du côté du bloc capteur 50. La lame 76 est courbe, déformable élastiquement et précontrainte axialement afin d'assurer un contact permanent avec la paroi radiale 69. Le balai électrostatique 75 se situe axialement entre la roue codeuse 65 et la carte 59 supportant l'organe de détection 60. Le balai électrostatique 75 se situe donc dans l'entrefer de l'ensemble capteur. Le balai 75 est décalé angulairement par rapport à l'organe de détection 60 pour conserver la compacité axiale de l'ensemble capteur, et pour éviter que le balai 75 ne perturbe les mesures effectuées par le capteur magnétosensible 60. Le balai 75 vient en contact sur la face interne de la portion une portion continue de la portion radiale 69, de façon à ne pas créer de vibration, et pour éviter une usure prématurée des éléments. Dans une autre variante, le balai 75 pourrait venir en contact avec une portion continue de la face externe de la paroi radiale 69 de la roue codeuse 65 orientée du côté opposé au bloc capteur 50. Les charges électrostatiques sont évacuées par le circuit de connexion électrique de la carte 59.

Dans une variante, le balai électrostatique 75 peut être disposé entre le bloc capteur 50, plus exactement la carte 59, et la bague intérieure tournante 28.

Lors du montage du tambour, on monte simplement le tambour 3 à rotation par l'intermédiaire du palier à roulement, qui comprend déjà un ensemble capteurs de paramètres de rotation du tambour 3. Le montage du tambour 3 est simple et demande un nombre d'opérations de montage limité. L'orientation du tambour est connue grâce aux moyens d'indexation de palier à roulement.

L'ensemble capteur des paramètres de rotation du tambour 3, et le balai électrostatique sont disposés du côté du palier à roulement opposé au tambour 3. L'organe d'étanchéité 36 empêche le passage d'élément extérieurs ou de liquide de l'enceinte 2 ou est située le tambour 3 vers le côté opposé de la portion radiale 46 du logement 45. L'ensemble capteur comprenant l'organe de détection, l'aimant, la carte, les moyens de connexion, le capteur de température et le balai 75 sont protégés car le joint d'étanchéité 36 empêche le passage d'eau vers le côté du palier à roulement 27 opposé au tambour 3. Le capteur de température 72 est d'autant plus protégé qu'il est noyé dans le bloc capteur 52. Cette position du moyen de détection de température permet néanmoins de connaître la température régnant dans l'enceinte 2, par conduction thermique.

Le montage du tambour 3 par l'intermédiaire d'un palier à roulement instrumenté permet de connaître des paramètres de rotation du tambour 3 comme la position, la vitesse et/ou l'accélération angulaire du tambour 3. On peut utiliser ces paramètres de rotation du tambour 3 pour connaître, et notamment l'accélération angulaire du tambour 3, pour détecter un balourd dans la machine dû à une mauvaise répartition de la charge dans le tambour 3, comme cela peut être le cas pour un tambour rempli de linge. On pourra alors réaliser un équilibrage de la machine à tambour, par exemple à l'aide de la commande de rotation du tambour 3.

Grâce à l'invention, on obtient une machine pourvue d'un tambour dont le montage est simple et peut être effectué par un nombre limité d'opération, et à l'aide d'un nombre limité d'élément. Le montage du tambour par l'intermédiaire d'un palier à roulement instrumenté permet de combiné les fonctions de guidage en rotation du tambour et de détection des paramètres de rotation du tambour, et de limiter le nombre d'opération de montage. Par ailleurs, on obtient un ensemble de montage du tambour compact et protégé vis-à-vis de l'agression d'éléments extérieurs ou de liquide remplissant le tambour.

## Revendications

1. Machine comprenant un bâti (1), un tambour (3) monté en rotation sur le bâti et une porte d'accès au tambour, **caractérisé par le fait que** le tambour est monté à rotation par l'intermédiaire d'un palier à roulement instrumenté (27) pourvu *d'une bague tournante (28), d'une bague non tournante (30) et* d'un ensemble capteur de paramètres de rotation du tambour (3), *ledit ensemble capteur comprenant un bloc capteur (50) fixé sur la bague tournante (28) et une roue codeuse* (65) *fixée sur la bague non tournante (30)*.

2. Machine selon la revendication 1, **caractérisé par le fait que** le palier à roulement instrumenté (27) comprend des moyens d'indexation angulaire (71, 68a) de la position du tambour (3).

3. Machine selon l'une quelconque des revendications 1 ou 2, **caractérisé par le fait que** le tambour (3) comprend une ouverture (14) formée dans une paroi cylindrique.

4. Machine selon l'une quelconque des revendications précédentes, **caractérisé par le fait que** le palier à roulement instrumenté comprend une liaison électrique (75) entre des éléments conducteurs associés respectivement au tambour (3) et au bâti (1).

5. Machine selon l'une quelconque des revendications précédentes, **caractérisé par le fait que** la liaison électrique (75) comprend une lame conductrice (76) solidaire par une extrémité d'une partie fixe (59) de l'ensemble capteur, et venant frotter pas son autre extrémité sur une partie tournante (69) du palier à roulement instrumenté (27).

6. Machine selon l'une quelconque des revendications 1 à 5, **caractérisé par le fait que** la liaison électrique (75) est disposée entre un bloc capteur (50) et une roue codeuse conductrice (65).

7. Machine selon l'une quelconque des revendications 1 à 5, **caractérisé par le fait que** la liaison électrique est disposée entre un bloc capteur (50) et une bague tournante du palier à roulement (28).

8. Machine selon l'une quelconque des revendications précédentes, **caractérisé par le fait que** le palier à roulement instrumenté comprend des moyens de détection de température (72).

## Claims

1. Machine, comprising a frame (1), a drum (3) mounted rotatably on the frame and an access door to the drum, **characterized in that** the drum is mounted rotatably by means of an instrumented rolling bearing (27) provided with a rotating ring (28), with a non-rotating ring (30) and with a sensor assembly for rotational parameters of the drum (3), the said sensor assembly comprising a sensor block (50) fastened to the non-rotating ring (30) and an encoder wheel (65) fastened to the rotating ring (28).

2. Machine according to Claim 1, **characterized in that** the instrumented rolling bearing (27) comprises means (71, 68a) for the angular indexing of the position of the drum (3).

3. Machine according to either one of Claims 1 or 2, **characterized in that** the drum (3) comprises an orifice (14) formed in a cylindrical wall.

4. Machine according to any one of the preceding claims, **characterized in that** the instrumented rolling bearing comprises an electrical connection (75) between conductive elements associated respectively with the drum (3) and with the frame (1).

5. Machine according to any one of the preceding claims, **characterized in that** the electrical connection (75) comprises a conductive blade (76) secured with one end to a fixed part (59) of the sensor assembly and brushing with its other end against a rotating part (69) of the instrumented rolling bearing (27).

6. Machine according to any one of Claims 1 to 5, **characterized in that** the electrical connection (75) is arranged between a sensor block (50) and a conductive encoder wheel (65).

7. Machine according to any one of Claims 1 to 5, **characterized in that** the electrical connection is arranged between a sensor block (50) and a rotating ring of the rolling bearing (28).

8. Machine according to any one of the preceding claims, **characterized in that** the instrumented rolling bearing comprises temperature detection means (72).

## Patentansprüche

1. Maschine mit einem Gestell (1), mit einer drehend auf das Gestell montiert Trommel (3) und mit einer Zugangstür zur Trommel, **dadurch gekennzeichnet, dass** die Trommel über ein instrumentiertes Wälzlager (27) drehbar montiert ist, das mit einem drehenden Ring (28), einem nicht drehenden Ring (30) und mit einer Sensoreinheit für Drehparameter der Trommel (3) versehen ist, wobei die Sensoreinheit einen Sensorblock (50), der auf dem nicht drehenden Ring (30) befestigt ist, und ein Codierrad (65) aufweist, das auf dem drehenden Ring (28) befestigt ist.

2. Maschine nach Anspruch 1, **dadurch gekennzeichnet, dass** das instrumentierte Wälzlager (27) Mittel zur Winkelindexierung (71, 68a) der Position der Trommel (3) aufweist.

3. Maschine nach einem der Ansprüche 1 oder 2, **dadurch gekennzeichnet, dass** die Trommel (3) eine Öffnung (14) aufweist, die in einer zylindrischen Wand ausgebildet ist.

4. Maschine nach einem der vorhergehenden Ansprüche, **dadurch gekennzeichnet, dass** das instrumentierte Wälzlager eine elektrische Verbindung (75) zwischen leitenden Elementen aufweist, die der Trommel (3) bzw. dem Gestell (1) zugeordnet sind.

5. Maschine nach einem der vorhergehenden Ansprüche, **dadurch gekennzeichnet, dass** die elektrische Verbindung (75) eine leitende Lamelle (76) aufweist, die über ein Ende fest mit einem festen Bereich (59) der Sensoreinheit verbunden ist und mit ihrem anderen Ende auf einem drehenden Bereich (69) des instrumentierten Wälzlagers (27) reibt.

6. Maschine nach einem der Ansprüche 1 bis 5, **dadurch gekennzeichnet, dass** die elektrische Verbindung (75) zwischen einem Sensorblock (50) und einem leitenden Codierrad (65) angeordnet ist.

7. Maschine nach einem der Ansprüche 1 bis 5, **dadurch gekennzeichnet, dass** die elektrische Verbindung zwischen einem Sensorblock (50) und einem drehenden Ring des Wälzlagers (28) angeordnet ist.

8. Maschine nach einem der vorhergehenden Ansprüche, **dadurch gekennzeichnet, dass** das instrumentierte Wälzlager Temperaturerfassungsmittel (72) aufweist.
